Europäisches Patentamt

European Patent Office

Office européen des brevets

(19)

(11) **EP 0 667 593 B1**

(12) **EUROPÄISCHE PATENTSCHRIFT**

(45) Veröffentlichungstag und Bekanntmachung des Hinweises auf die Patenterteilung:
**01.08.2001 Patentblatt 2001/31**

(51) Int Cl.$^7$: **G06T 5/20**

(21) Anmeldenummer: **94120532.0**

(22) Anmeldetag: **23.12.1994**

(54) **Verfahren zur Beeinflussung der Bildqualität von durch eine elektronische Bildaufnahmevorrichtung gelieferten Bildern**

Method for modifying the quality of images from an electronic imaging device

Procédé pour modifier la qualité des images fournies par un capteur électronique d'images

(84) Benannte Vertragsstaaten:
**BE DE ES FR GB IT SE**

(30) Priorität: **09.02.1994 DE 4404047**

(43) Veröffentlichungstag der Anmeldung:
**16.08.1995 Patentblatt 1995/33**

(73) Patentinhaber: **LFK Lenkflugkörpersysteme GmbH**
**81663 München (DE)**

(72) Erfinder:
• **Schweyer, Nikolaus**
**D-81739 München (DE)**
• **Dzida, Karl**
**D-83620 Feldkirchen-Westerham (DE)**

(74) Vertreter: **Hummel, Adam et al**
**DaimlerChrysler AG**
**Intellectual Property Management**
**Postfach 80 04 65**
**81663 München (DE)**

(56) Entgegenhaltungen:
**EP-A- 0 182 423          EP-A- 0 238 962**
**US-A- 4 187 519**

• **PATTERN RECOGNITION, Bd.24, Nr.4, 1991, UK Seiten 289 - 302 DASH L & CHATTERJI B N 'Adaptive Contrast Enhancement and De-Enhancement'**
• **PINSON L J ET AL. : "Evaluation of image processing for man-in-loop target acquisition", PROCEEDINGS OF THE SPIE, IMAGE PROCESSING FOR MISSILE GUIDANCE , SAN DIEGO, 1980, Band 238, Nr. -, Seiten 119 - 125**

**Beschreibung**

Die Erfindung betrifft ein Verfahren zur Beeinflussung der Bildqualität von durch eine elektronische Bildaufnahmevorrichtung in Form von Grauwerte repräsentierenden Bildpunktsignalen gelieferten Bildern, gemäß dem Oberbegriff des Patentanspruchs 1.

Ein derartiges Verfahren ist aus SPIE, Vol. 238, Image Processing for Missile Guidance (1980), Seiten 119 bis 125, bekannt. Es handelt sich dabei um von einer elektronischen Bildaufnahmevorrichtung gelieferte Bilder, welche jeweils aus einer Vielzahl von regelmäßig flächenhaft verteilten Bildpunkten zusammengesetzt sind. Die Bildpunktsignale repräsentieren Grauwerte. Um die einzelnen Bildpunkte herum werden rechteckige Bildausschnitte definiert, und aus den Bildpunktsignalen f(x,y) der innerhalb dieser Bildausschnitte gelegenen Bildpunkte werden die lokale Helligkeit sowie den lokalen Kontrast repräsentierende Helligkeits-Kennwerte H sowie Kontrast-Kennwerte K errechnet und den einzelnen Bildpunkten zugeordnet. Die Bildpunktsignale f(x,y) werden dann mit Hilfe dieser Kennwerte modifiziert, und zwar im Sinne einer Beeinflussung von Grundhelligkeit und Kontrastanteil. Die so entstehenden modifizierten Bildpunktsignale g(x,y) gehen aus den ursprünglichen Bildpunktsignalen f(x,y) gemäß folgender Vorschrift hervor:

$$g(x,y) = kH + c[f(x,y)-H]/K.$$

Der erste dieser beiden Summanden kann als Grundhelligkeit, der zweite als Kontrastanteil des Bildpunktsignals bezeichnet werden. Der Helligkeits-Kennwert H wird auf später noch näher zu erläuternde Weise durch Mittelung über alle innerhalb des jeweiligen Bildausschnittes vorhandnen Bildpunkte errechnet und stellt somit einen auf diesen Bildauschnitt bezogenen, d.h. lokalen Helligkeits-Kennwert dar, welcher zunächst als Maß für die Grundhelligkeit fungiert. Die individuelle Helligigkeitsabweichung des einzelnen Bildpunktsignales f(x,y) von dem zugeordneten Helligkeits-Kennwert H bildet, multipliziert mit dem Quotienten c/K, den individuellen Kontrastanteil des jeweiligen Bildpunktsignales. Mit Hilfe der Konstanten k ist die Grundhelligkeit, mit Hilfe der Konstanten c der Kontrastanteil variierbar. Der Kontrast-Kennwert K leitet sich durch Mittelung über sämtliche Bildpunkte des jeweiligen Bildausschnittes aus den Abweichungen der individuellen Bildpunktsignale vom Helligkeits-Kennwert ab, wie weiter unten näher erläutert. Seine Einführung in die o.g. Vorschrift führt dazu, daß die individuellen Kontrasanteile der Bildpunktsignale umgekehrt proportional zum Kontrast-Kennwert modifiziert werden. Die Grundhelligkeit der einzelnen Bildpunkte wird gemäß der Grundhelligkeit der lokalen Umgebung nivelliert und der Kontrastanteil bei geringem Umgebungskontrast angehoben sowie bei hohem Umgebungskontrast gedämpft.

Bei diesem Bildverarbeitungsverfahren wird also zu jedem einzelnen Bild punkt ein ihn umgebender, rechteckiger Bildausschnitt definiert, wobei alle diese Bildausschnitte gleich groß sind, und durch Mittelung über alle darin gelegenen Bildpunkte der dem jeweiligen Bildausschnitt zuzuordnende Helligkeits-Kennwert sowie Kontrast-Kennwert errechnet. Die Bildpunktsignale werden nacheinander der Modifizierung gemäß der oben gegebenen Vorschrift unterzogen, und für jeden einzelnen Bildpunkt ist ein erheblicher Rechenaufwand zu betreiben, welcher um so höher wird, je größer die jeweiligen Bildausschnitte gewählt werden. Ein derartiger Rechenaufwand ist nicht in jedem Falle vertretbar.

*Aus PATTERN RECOGNITION, Bd.24, Nr.4, 1991, UK Seiten 289 - 302, DASHL & CHATTERJI B N "Adaptive Contrast Enhancement and De-Enhancement" ist es bekannt, eine nichtlineare Kontrastspreizung durchzuführen, und zwar stärker in homogenen Gebieten, und schwächer in der Nähe von Kanten. Dazu wird das Bild mit einem Kantenoperator gefiltert und lokal einen "mean edge gray value"-Mittelwert, ein Maß für den Anteil von Kanten im Bildauschnitt, ermittelt. Es wird ein Kontrastwert für ein Pixel definiert.*

*Ein weiteres aus der Patentschrift US-A 4 187 519 bekanntes Verfahren bestimmt lokal Maximum und Minimum und verschiebt und verstärkt das Bildsignal lokal so, daß die Extremwerte die Aussteuerungsgrenzen erreichen. Für das Gesamtbild geht dann der Überblick verloren, da dann alle Ausschnitte die maximal mögliche Kontrastspreizung aufweisen und überall im Bild Details und künstliche Strukturen auftreten. Das Suchen von bestimmten Objekten wird erschwert. Details sind für das Auge ungewohnt kontrastreich und durch das gleichfalls verstärkte Bildrauschen gestört.*

*Die lokale Helligkeit läßt sich bei dieser Art der Kontrastspreizung nicht unabhängig einstellen. Der Betrachter wird z.B. irritiert, wenn ein leicht bewölkter Himmel dunkler oder gleich dunkel erscheint wie der Erdboden.*

*Es wird auch auf die Möglichkeit hingewiesen, die lokale Amplitudenverteilung zu berücksichtigen und statt Maximum und Minimum z.B. die 80% und 20% Werte der Amplitudenverteilung zu verwenden. Dies ist zwar besser, denn Extremwerte können Ausreißer und damit statistisch irrelevant sein, ändert aber prinzipiell nichts an dem Verfahren der totalen Spreizung des lokalen Bildes mit* all *den oben beschriebenen Nachteilen. Auch eine Spreizung auf einen Teilbereich des Aussteuerungsbereichs ändert nichts daran, daß die lokalen Verhältnisse, also Helligkeit und Kontrast bei der Spreizung nicht berücksichtigt werden.*

*Der Erfindung liegt daher die Aufgabe zugrunde, ein Verfahren der eingangs genannten Art anzugeben, welches mit einem möglichst geringen Rechenaufwand auskommt und trotzdem die genannten Vorteile bietet.*

*Diese Aufgabe wird gemäß der Erfindung durch die im kennzeichnenden Teil des Patentan-*

spruchs 1 genannten Merkmale gelöst. Die Unteransprüche stellen vorteilhafte Ausführungs formen dar. Gemäß der Erfindung wird der oben erwähnte, erhebliche Rechenaufwand dadurch reduziert, daß nicht jedem einzelnen Bildpunkt innerhalb des gesamten Bildes ein eigener Bildausschnitt zugeordnet wird, für den jeweils die umfangreichen Berechnungen des Helligkeits- und Kontrast-Kennwertes vorzunehmen sind, sondern es werden vielmehr nur einige einzelne Bildpunkte, im folgenden als Stützpunkte bezeichnet, ausgewählt. Diese Auswahl geschieht so, daß mittels geeigneter Definition der die Stützpunkte umgebenden Bildausschnitte zumindest die interessierenden Bereiche des Bildes, i.a. also das gesamte Bild durch diese Bildausschnitte vollständig abgedeckt ist. Damit brauchen nur für eine der Anzahl der ausgewählten Stützpunkte entsprechende Anzahl von Bildausschnitten die jeweiligen Helligkeits- und Kontrast-Kennwerte berechnet zu werden, welche dann den zugehörigen Stützpunkten zugeordnet werden. Da die Anzahl der das gesamte Bild abdeckenden Bildausschnitte ersichtlich um Größenordnungen geringer gewählt werden kann als die Anzahl sämtlicher im Bild vorhandenen Bildpunkte, so ergibt sich hieraus eine deutliche Reduzierung des Rechenaufwandes. Die für die einzelnen Bildausschnitte ermittelten Helligkeits- und Kontrast-Kennwerte können dann zur Modifizierung der Bildpunktsignale der dem jeweiligen Bildausschnitt angehörenden Bildpunkte im oben erwähnten Sinne herangezogen werden.

Zur Modifizierung der von der elektronischen Bildaufnahmevorrichtung ausgegebenen Bildpunktsignale werden die oben erwähnten Kennwerte benötigt. Diese können sowohl aus den einlaufenden Bildpunktsignalen selbst als auch aus den bereits modifizierten Bildpunktsignalen ermittelt werden.

Gemäß einer ersten von zwei Hauptvarianten der Erfindung ist vorgesehen, daß aus den den Stützpunkten zugeordneten Kennwerten durch zweidimensionale Interpolation entsprechende, jeweils den übrigen Bildpunkten zugeordnete Kennwerte gewonnen und ihrerseits zur Modifizierung der Bildpunktsignale dieser übrigen Bildpunkte verwendet werden. Es werden somit aus dem Raster der ursprünglichen Gesamtheit der Bildpunkte zunächst einige Stützpunkte ausgewählt, nur für diese Stützpunkte die Kennwerte berechnet und aus dieser beschränkten Menge von Kennwerten durch zweidimensionale Interpolation wiederum eine dem ursprünglichen Raster und der ursprünglichen Menge der Bildpunkte entsprechende Anzahl von Kennwert-Paaren gewonnen. Diese Interpolation ist eine hinsichtlich des Rechenaufwandes begrenzte Operation, die nicht von der Anzahl und Größe der ausgewählten Bildausschnitte abhängt. Es handelt sich dabei um eine arithmetisch sehr einfache Operation, die einen erheblich geringeren Rechenaufwand benötigt, als dies im Falle des eingangs genannten Verfahrens erforderlich ist. Nach Beendigung des Interpolationsverfahrens ist demnach jedem Bildpunkt, ähnlich wie bei dem eingangs diskutierten bekannten Verfahren, wiederum ein individuelles Paar von Kennwerten zugeordnet, so daß die Grundhelligkeit und der Kontrastanteil, wie weiter unten noch im Detail geschildert, jeweils individuell modifiziert werden können.

Gemäß der zweiten Hauptvariante der Erfindung ist vorgesehen, daß die berechneten Kennwerte zur kollektiven Modifizierung sämtlicher Bildpunktsignale des jeweiligen Bildausschnittes des gerade aktuellen Bildes verwendet werden. Hierbei ist vorausgesetzt, daß zur Berechnung der den Stützpunkten zuzuordnenden Kennwerte die bereits modifizierten Bildpunktsignale des vorangehenden Bildes herangezogen werden.

Während bei der ersten Hauptvariante der Erfindung also durch die Interpolation der Kennwerte eine individuelle Modifizierung der Bildpunktsignale eines Bildes ermöglicht wird, beschränkt sich die zweite Variante darauf, die Modifizierung der Bildpunktsignale des jeweiligen Bildausschnittes pauschal vorzunehmen, wobei in jedem neuen Bild das Ergebnis der Modifizierung des vorangegangenen Bildes über die aus letzterem ermittelten Kennwerte berücksichtigt wird.

In Weiterbildung der zweiten Variante kann so vorgegangen werden, daß der jeweilige Kontrast-Kennwert einer Bewertung unterzogen wird und die Modifizierung der Bildpunktsignale in Abhängigkeit vom Ergebnis dieser Bewertung auf unterschiedliche Weise vorgenommen wird. Einmal kann bei einem zu niedrigen Kontrast-Kennwert innerhalb des jeweiligen Bildausschnittes die Grundhelligkeit der Bildpunktsignale des vorangehenden Bildes beibehalten und nur der Kontrastanteil angehoben werden, und zum anderen kann bei einem zu hohen Kontrast-Kennwert die Grundhelligkeit entweder vermindert oder erhöht werden, je nachdem, ob der zugehörige Helligkeits-Kennwert in Bezug auf ein vorgebbares Unterscheidungskriterium sich als hoch oder niedrig erweist.

Im folgenden werden Ausführungsbeispiele der Erfindung anhand von Abbildungen näher erläutert. Es zeigen in schematischer Weise:

Fig. 1    ein Blockdiagramm des bekannten Verfahrens,

Fig. 2    ein Blockdiagramm gemäß der ersten Hauptvariante der Erfindung,

Fig. 3    ein Blockdiagramm gemäß der zweiten Hauptvariante der Erfindung,

Fig. 4    ein in Bildausschnitte aufgeteiltes Bild mit zugeordneten Stützpunkten,

Flg. 5    eine Vorrichtung zur Durchführung des erfindungsgemäßen Verfahrens gemäß der ersten Hauptvariante.

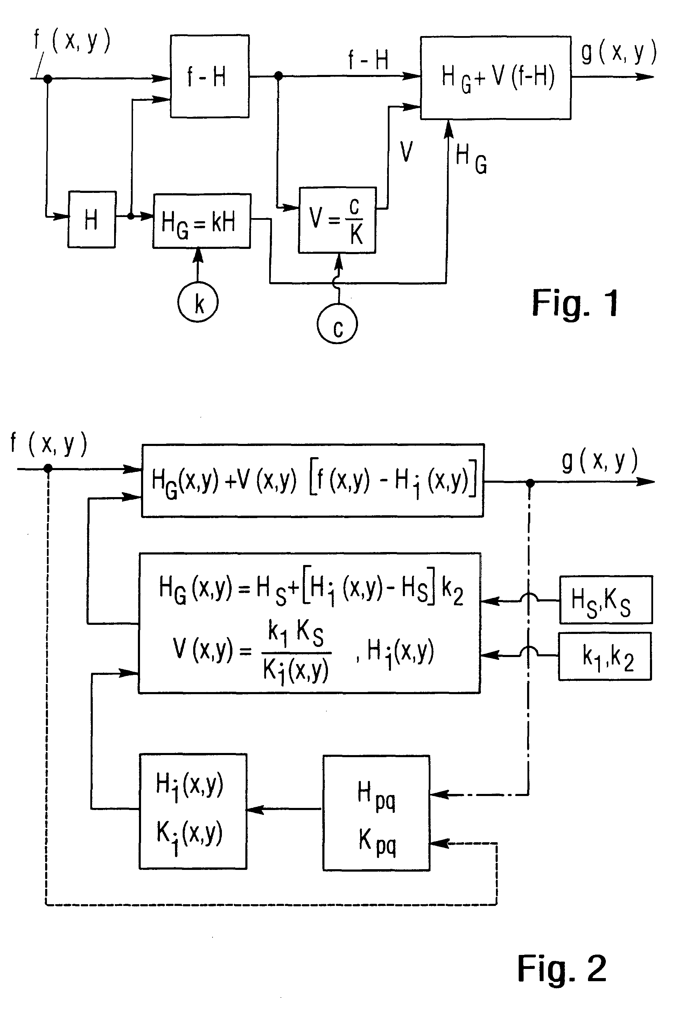

Gemäß Fig. 1, welche das eingangs diskutierte bekannte Verfahren schematisch wiedergibt, werden von einer elektronischen Bildaufnahmevorrichtung ausgegebene Bildpunktsignale f(x,y) in modifizierte Bildpunktsignale g<x,y) umgewandelt. Die Koordinaten x,y geben an, daß die Bildpunkte in einem orthogonalen Koordinatensystem angeordnet sein sollen. Dabei ist eine regelmäßige, zeilen- und spaltenweise Anordnung innerhalb einer rechteckig oder quadratisch begrenzten Bildebene bevorzugt. x ist dabei die Spaltenkoordinate, y die Zeilenkoordinate. Die Bildpunkte folgen in Richtung dieser Koordinaten in regelmäßigen Abständen aufeinander. Jedem Bildpunkt ist ein Grauwert zugeordnet, dem das jeweilige Bildpunktsignal f(x,y) entspricht.

Bei dem bekannten Verfahren wird nun jedem einzelnen Bildpunkt ein Bildausschnitt zugeordnet, beispielsweise in rechteckiger Form mit dem jeweiligen Bildpunkt im Zentrum. Zu diesem Bildausschnitt wird zunächst ein als Helligkeits-Kennwert bezeichneter Kennwert berechnet, welcher für die lokale Helligkeit in der Umgebung dieses Bildpunktes, nämlich innerhalb des zugeordneten Bildausschnittes, repräsentativ ist. Dies kann durch Mittelung über alle innerhalb des jeweiligen Bildausschnittes gelegenen Bildpunkte gemäß der folgenden Vorschrift geschehen:

$$H = \frac{1}{N} \sum_{j=1}^{N} f_j(x,y).$$

Hier wird über die N Bildpunktsignale sämtlicher innerhalb des jeweiligen Bildausschnittes gelegenen Bildpunkte gemittelt. Anschließend wird der so berechnete Helligkeits-Kennwert H zur Ermittlung eines Wertes für die Grundhelligkeit $H_G$ des modifizierten Bildpunktsignales g(x,y) herangezogen. Dies geschieht nach der Vorschrift

$$H_G = kH$$

wobei k eine Konstante zur wunschgemäßen Beeinflussung der Grundhelligkeit des modifizierten Bildpunktsignales ist. Gleichzeitig wird die Differenz f(x,y)-H berechnet und anschließend zur Ermittlung eines Verstärkungsfaktors V = c/K herangezogen. In diesem tritt neben der zunächst frei wählbaren Konstante c der Kontrastkennwert K auf, welcher mit Hilfe aller Bildpunktsignale des jeweiligen Bildausschnittes durch Mittelung nach der folgenden Vorschrift berechnet wird:

$$K = \left\{ \frac{1}{N} \sum_{j=1}^{N} [f_j(x,y)-H]^2 \right\}^{1/2}$$

Schließlich wird aus der Differenz f(x,y)-H, dem Helligkeitsgrundwert $H_G$ sowie dem Verstärkungsfaktor V das modifizierte Bildpunktsignal g(x,y) gemäß der folgenden Vorschrift gebildet:

$$g(x,y) = H_G+V[f(x,y)-H]$$

Bei dem bekannten Verfahren wird somit für jeden einzelnen Bildpunkt bzw. jedes einzelne Bildpunktsignal zweimal eine Mittelung über sämtliche Bildpunkte innerhalb des zugeordneten Bildausschnittes vorgenommen, nämlich einmal bei der Ermittlung des Helligkeits-Kennwertes H, und zum anderen bei der Ermittlung des Kontrast-Kennwertes K. Diese umfangreichen Berechnungen werden zum Zwecke der Modifizierung jedes einzelnen Bildpunktsignales des gesamten Bildes durchgeführt. Der hierzu erforderliche Rechenaufwand steigt somit ersichtlich mit der Größe der den Bildpunkten per Definition zugeordneten Bildausschnitte. Von dieser Größe hängt es ab, in welchem Ausmaß die weitere Umgebung des Bildpunktes bei der Modifizierung zur Wirkung kommt. Das modifizierte Bildpunktsignal g (x,y) besteht aus einem ersten Summanden $H_G$, welcher einer Grundhelligkeit entspricht, und einem zweiten Summanden, welcher einen individuellen Kontrastanteil wiedergibt und durch ein Produkt aus dem oben genannten Verstärkungsfaktor V sowie der Differenz f (x,y)-H gebildet wird. Die individuelle Abweichung des jeweiligen Bildpunktsignales f(x,y) von der lokalen Helligkeit, gegeben durch den Helligkeits-Kennwert H, wird durch den Verstärkungsfaktor V also angehoben, wenn der lokale Kontrast, verkörpert durch den Kontrast-Kennwert K, klein ist, bzw. gedämpft, wenn der lokale Kontrast groß ist.

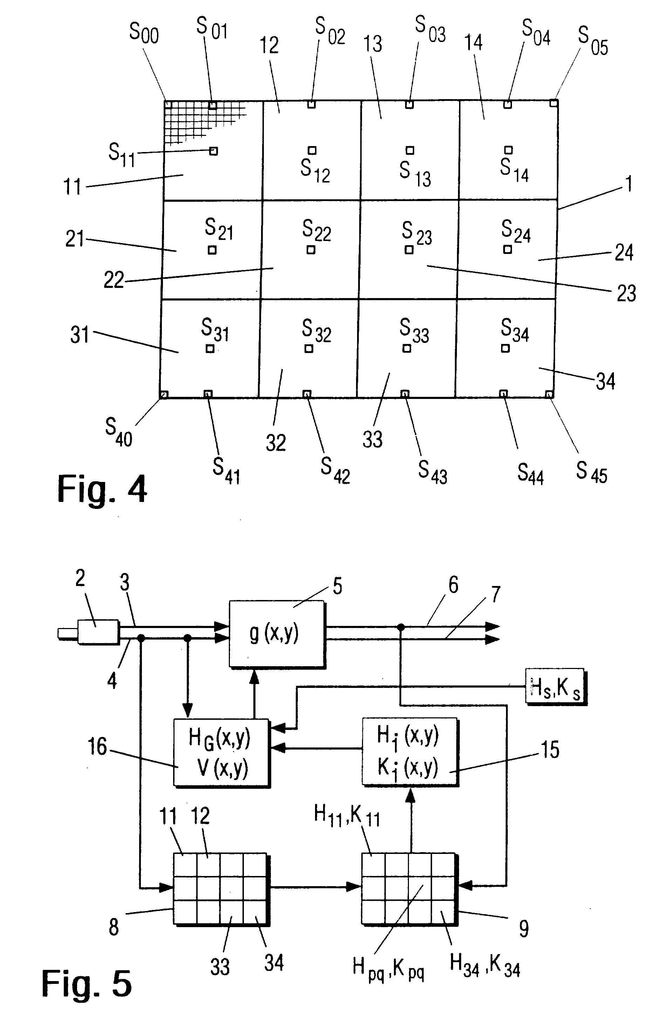

Fig. 2 stellt nun schematisch dar, wie die geschilderten, durch hohen Rechenaufwand bedingten Nachteile des bekannten Verfahrens gemäß einer ersten Hauptvariante der Erfindung vermieden werden können. Demnach werden zuerst Stützpunkte, d.h. regelmäßig mit Abstand über die Bildfläche verteilte einzelne Bildpunkte ausgewählt, welche mit den Indizes p, q bezeichnet werden, wobei p einen Zeilenindex und q einen Spaltenindex bedeuten. Zu jedem dieser Stützpunkte $S_{pq}$ wird ein beispielsweise rechteckiger Bildausschnitt definiert, und zwar in Abhängigkeit vom gegenseitigen Abstand der Stützpunkte in der Weise, daß sämtliche Bildausschnitte das gesamte Bild annähernd vollständig abdecken, nach Möglichkeit ohne Lücken oder Überlappungen. Eine derartige Anordnung von Blldausschnitten und Stützpunkten ist in Fig. 4 beispielhaft wiedergegeben. Zu jedem dieser Stützpunkte werden nun durch Mittelung über sämtliche innerhalb des jeweils zugeordneten Bildausschnittes gelegenen Bildpunkte die zugehörigen Helligkeits-Kennwerte $H_{pq}$ sowie Kontrast-Kennwerte $K_{pq}$ berechnet. Dies kann beispielsweise nach der bereits oben angegebenen Vorschrift für die Berechnung der entsprechenden Kennwerte H und K geschehen.

Die Berechnung der genannten Kennwerte kann mit Hilfe der von der elektronischen Bildaufnahmevorrichtung gerade ausgegebenen Bildpunktsignale $f(x,y)$ geschehen (gestrichelte Verbindungslinie), im Sinne einer Steuerung, es können aber auch die bereits modifizierten Bildpunktsignale $g(x,y)$ verwendet werden (strichpunktierte Linie), im Sinne einer Regelung.

Anschließend werden, wieder losgelöst von den zuvor definierten Bildausschnitten, jedoch ausgehend von den Kennwert-Paaren $H_{pq}$ und $K_{pq}$ der Stützpunkte, durch zweidimensionale Interpolation für sämtliche Bildpunkte innerhalb des Bildes interpolierte Kennwerte $H_i(x,y)$ sowie $K_i(x,y)$ berechnet. Von dem relativ grobmaschigen Raster der Stützpunkte wird also wieder auf das feinmaschige Raster der ursprünglichen Bildpunkte übergegangen, wobei jedem dieser Bildpunkte ein individuelles Paar von Kennwerten zugeordnet wird, welches jedoch nicht auf die rechnerisch aufwendige Weise des bekannten Verfahrens ermittelt wurde. Diese individuellen Kennwerte werden anschließend zur Modifizierung der entsprechenden Bildpunktsignale $f(x,y)$ im Sinne einer Beeinflussung von deren Grundhelligkeit sowie Kontrastanteil herangezogen.

Dies kann auf die in Fig. 2 dargestellte Weise nach den folgenden Vorschriften geschehen:

$$V(x,y) = k_1 K_S / K_i(x,y)$$

$$H_G(x,y) = H_S + [H_i(x,y) - H_S]k_2$$

In diese Berechnungen gehen neben vorgebbaren Konstanten $k_1$ und $k_2$ noch ein Grundhelllgkelts-Sollwert $H_S$ sowie ein Vergleichswert $K_S$ für den Kontrast ein. Diese Werte können für das gesamte Bild einheitlich gewählt werden, dies muß aber nicht der Fall sein. Der vorgebbare Grundhelligkeits-Sollwert $H_S$ bestimmt in mehr oder weniger ausgeprägtem Maße die Grundhelligkeit der Bildpunkte. Für $k_2 = 0$ ist er mit letzterer identisch, für $k_2 = 1$ verschwindet er völlig, so daß nur noch der individuelle, interpolierte Helligkeits-Kennwert $H_i(x,y)$ bei der Bildpunkt-Grundhelligkeit zur Wirkung kommt. Der Parameter $k_2$ kann also innerhalb eines Wertebereiches $0 \leqq k_2 \leqq 1$ gewählt werden. Die Berechnungsvorschrift ermöglicht es somit, die Grundhelligkeit der Bildpunkte mehr oder weniger ausgeprägt einem vorgebbaren Sollwert anzupassen. Es ist allerdings auch möglich, die Grundhelligkeit ohne Vorgabe eines derartigen Sollwertes zu beeinflussen, beispielsweise in der oben bereits geschilderten, bekannten Weise:

$$H_G(x,y) = kH_i(x,y)$$

Das modifizierte Bildpunktsignal $g(x,y)$ wird dann aus Grundhelligkeit und Kontrastanteil gemäß der folgenden Vorschrift gebildet:

$$g(x,y) = H_G(x,y) + V(x,y)[f(x,y) - H_i(x,y)]$$

Je nach Art der Bildabtastung sowie Abfolge der Interpolationsschritte wird für die erforderlichen Berechnungen eine gewisse Zeit benötigt werden, bevor die Werte für die Grundhelligkeit und die Verstärkung zur Modifizierung der einzelnen Bildpunktsignale zur Verfügung stehen. Es muß also dafür Sorge getragen werden, daß die von der elektronischen Bildaufnahmevorrichtung ausgegebenen Bildpunktsignale für eine entsprechende Zeit in einem Speicher abgelegt werden können, bevor sie schließlich gemäß der obigen Vorschrift modifiziert werden.

Bisher wurde davon ausgegangen, daß die Helligkeits- und Kontrast-Kennwerte durch Mittelung über sämtliche Innerhalb des jeweiligen Bildausschnittes enthaltenen Bildpunkte gemäß den weiter oben angegebenen Vorschriften berechnet werden. Es ist aber auch möglich, diese Kennwerte auf andere Weise zu definieren.

So können beispielsweise innerhalb eines gegebenen Bildausschnittes eine obere und eine untere Signalschwelle $U_o$ bzw. $U_u$ vorgegeben werden, wobei diese etwa symmetrisch zur Mitte des Aussteuerbereiches gewählt werden können, und zwar so, daß ihre Differenz $U_o - U_u$ gerade die Hälfte des Aussteuerbereiches ausmacht. Dann werden die einzelnen Bildpunktsignale innerhalb des Bildausschnittes dahingehend überprüft, ob ihr Signalpegel oberhalb der oberen bzw. unterhalb der unteren Signalschwelle liegt. Die entsprechenden Anzahlen werden mit $N_O$ bzw. $N_U$ bezeichnet. Hierbei handelt es sich also um die Anzahl von "Ausreißern", deren Signalpegel außerhalb des durch die genannten Signalschwellen gegebenen Teilbereiches liegen. Die Helligkeits- und Kontrast-Kennwerte H bzw. K werden dann in folgender Weise definiert:

$$H = (N_o - N_u)/N$$

$$K = (N_o + N_u)/N$$

wobei N die Gesamtzahl der im jeweiligen Bildausschnitt enthaltenen Bildpunkte bedeutet. Hier kann also der Fall auftreten, daß der Helligkeits-Kennwert H auch negative Herte annehmen bzw. 0 sein kann, während der Kontrast-Kennwert K nach wie vor zumindest nicht negativ sein kann. Eine schlechte Ausnutzung des Aussteuerbereiches liegt dann vor, wenn K = 0 gilt, die Signalpegel sämtlicher Bildpunktsignale also innerhalb des durch die beiden genannten Signalschwellen abgegrenzten Teilbereiches liegen. Dann sollte für den entsprechenden Bildausschnitt ein modifizierender Eingriff vorgenommen werden, der zu einer besseren Ausnutzung der oberen und unteren Regionen des Aussteuerbereiches führt. Liegt ein positiver Kontrast-Kennwert vor, so sollte der modifizierende Eingriff bewirken, daß die Zahl der "Ausreißer" ober- bzw. unterhalb der beiden genannten Signalschwellen in einem einigermaßen ausgewogenen Verhältnis zueinander stehen.

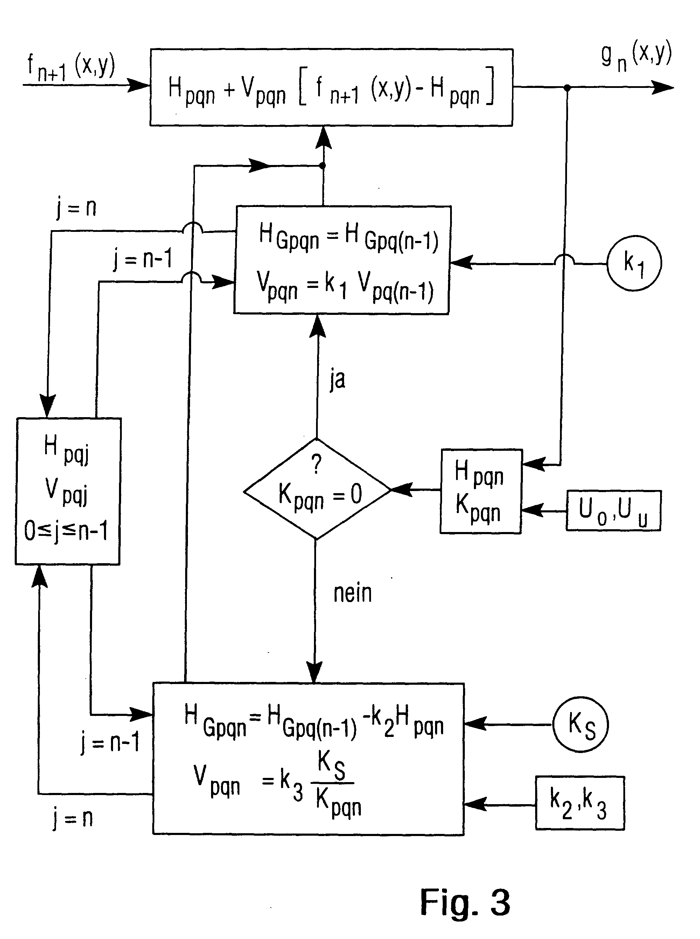

Diese Forderungen sind bei dem in Fig. 3 schematisch dargestellten Verfahren berücksichtigt, welches eine Ausführungsform der zweiten Hauptvariante der Erfindung bildet. Hierbei wird von den bereits modifizieren Bildpunktsignalen $g_n$ (x,y) des vorhergehenden Bildes ausgegangen, um die Bildpunktsignale $f_{n+1}$(x,y) des gerade aktuellen Bildes zu modifizieren.

Auch hier werden, wie oben bereits geschildert, Stützpunkte ausgewählt und zugeordnete Bildausschnitte definiert. Für jeden Bildausschnitt werden unter Berücksichtigung oberer und unterer Signalschwellen $U_o$ bzw. $U_u$ ein Helligkeits-Kennwert $H_{pqn}$ sowie ein Kontrast-Kennwert $K_{pqn}$ berechnet. Letzterer wird anschließend einer Bewertung dahingehend unterzogen, ob gilt: $K_{pqn} = 0$ oder $K_{pqn} > 0$. Im ersteren Falle wird die Grundhelligkeit der Bildpunkte innerhalb des jeweiligen Bildausschnittes beibehalten und die Verstärkung des Kontrastanteiles erhöht gemäß den Vorschriften:

$$H_{Gpqn} = H_{Gpq(n-1)}$$

$$V_{pqn} = k_1 V_{pq(n-1)}$$

wobei stets gilt: $k_1 > 1$. Die Indizes n-1, n, n+1 usw. beziehen sich jeweils auf zeitlich unmittelbar aufeinanderfolgende Bilder. Dies führt von Bild zu Bild zu einer schrittweisen Erhöhung des Kontrastanteiles innerhalb des jeweiligen Bildausschnittes mit der Folge, daß schließlich die Voraussetzung $K_{pqn} = 0$ nicht mehr erfüllt ist, also erstmals "Ausreißer" auftreten.

In diesem Falle und bei Auftreten von "Ausreißern" von Anfang an, d.h. im zweiten der obigen beiden Fälle, wird nun die Grundhelligkeit modifiziert, und zwar gemäß der folgenden Vorschrift:

$$H_{Gpqn} = H_{Gpq(n-1)} - k_2 H_{pqn}$$

Hier wird also die Grundhelligkeit innerhalb des jeweiligen Bildausschnittes gegenüber der des vorausgegangenen Bildes (n-1) vermindert, wenn der zugehörige Helligkeits-Kennwert $H_{pqn}$ positiv ist, und erhöht, wenn dieser Wert negativ ist. Die Signalpegel der gesamten Bildpunktsignale innerhalb des jeweiligen Bildausschnittes werden also gemeinsam erhöht, wenn zu viele "Ausreißer" im unteren Aussteuerbereich liegen, und abgesenkt, wenn zu viele "Ausreißer" im oberen Aussteuerbereich liegen.

Für die Verstärkung $V_{pqn}$ wird dann angesetzt:

$$V_{pqn} = k_3 K_S / K_{pqn}$$

mit einer vorwählbaren Konstante $k_3$ sowie einem Vergleichswert $K_S$.

Die neuberechneten Werte $H_{Gpqn}$ sowie $V_{pqn}$ werden jeweils in einen Speicher eingegeben, aus dem auch die vorhergehenden Werte für (n-1) im Bedarfsfalle entnommen werden.

Schließlich werden die aktuellen Bildpunktsignale $f_{n+1}$(x,y) modifiziert gemäß der Formel:

$$g_{n+1}(x,y) = H_{Gpqn} + V_{pqn}[f_{n+1}(x,y) - H_{pqn}]$$

Die aktuellen Bildpunktsignale (n+1) werden also hinsichtlich Grundhelligkeit und Kontrastanteil mit Korrekturgrößen modifiziert, welche aus den bereits modifizierten Bildpunktsignalen des vorangehenden Bildes gewonnen werden.

Eine weitere Möglichkeit der Definition der Helligkeits- und Kontrast-Kennwerte besteht darin, daß für den jeweiligen Bildausschnitt obere und untere Signalpegel $V_o$ bzw. $V_u$ so ermittelt werden, daß beispielsweise jeweils 10 % der gesamten innerhalb des Bildausschnittes liegenden Bildpunktsignale oberhalb von $V_o$ und 10 % unterhalb von $V_u$ liegen. Hierbei ist es erforderlich, erst alle Bildpunktsignale eines Bildausschnittes zu sammeln, weil die Entscheidung, wo die genannten Signalpegel liegen sollen, vorher nicht getroffen werden kann. Nach Vorliegen aller N Bildpunktsignale können dann jeweils die 10 % mit den höchsten und den niedrigsten Signalpegeln abgezählt werden, woraus sich die Lage von $V_o$ und $V_u$ ergibt. Die beiden genannten Kennwerte H und K können dann gemäß den folgenden Vorschriften bestimmt werden:

$$H = (V_o + V_u)/2$$

$$K = V_o - V_u$$

Die so ermittelten Kennwerte können zumindest niemals negativ sein. Der Kontrast-Kennwert wird immer dann relativ klein sein, wenn die Bildpunktsignale sämtlicher Bildpunkte innerhalb des jeweiligen Bildausschnittes dicht beieinander liegen. Der Kontrast-Kennwert wird hingegen immer größer, je mehr Bildpunktsignale mit ihren Signalpegeln in die Nähe der oberen und gleichzeitig der unteren Grenze des Aussteuerbereiches geraten. Entsprechendes gilt für den Helligkeits-Kennwert. Diese Art der Kennwert-Definition kann ebenfalls bei dem Verfahren gemäß Fig. 2 angewandt werden.

In Fig. 4 ist schematisch die Struktur eines Bildes 1 dargestellt. Die Bildfläche ist in diesem Falle in zwölf rechteckige Bildausschnitte 11 bis 34 eingeteilt, die jeweils um Stützpunkte $S_{11}$ bis $S_{34}$ angeordnet und diesen zugeordnet sind. Jeder der Bildausschnitte enthält eine Vielzahl von N In Zeilen und Spalten angeordneter, nur im Falle des Bildausschnittes 11 teilweise zeichnerisch angedeuteter, sonst aber nicht dargestellter Bildpunkte, von denen einer jeweils als Stützpunkt ausgewählt ist. Die Stützpunkte selber sind im vorliegenden Ausführungsbeispiel in drei Zeilen und vier Spalten angeordnet. Der Zeilenindex p läuft von 1 bis 3, der Spaltenindex q von 1 bis 4. Eine Aufteilung des gesamten Bildes 1 in derart regelmäßiger Weise mittels rechteckiger Bildausschnitte 11 bis 34, welche direkt aneinandergrenzen und sich weder überlappen noch Lükken aufweisen, ist zweckmäßig, stellt jedoch nicht die einzige Möglichkeit der Auswahl von Stützpunkten und der Definition von Bildausschnitten dar. Beispielsweise müssen die Bildausschnitte nicht immmer die gleiche Form und auch nicht die gleiche Größe aufweisen; es können auch Überlappungen oder Lücken auftreten.

Wie oben bereits erwähnt, wird bei der einen Hauptvariante der Erfindung nach der Auswahl der Stützpunkte und der Definition der dazugehörigen Bildausschnitte und der Berechnung des zugehörigen Paares von Helligkeits- und Kontrast-Kennwerten anschließend eine Interpolation in zwei Dimensionen vorgenommen, um jedem der einzelnen Bildpunkte des gesamten Bildes wiederum ein eigenes Paar von Kennwerten zuzuordnen. Hierzu kann so vorgegangen werden, daß zunächst zusätzliche Stützpunkte $S_{01}$ bis $S_{04}$ sowie $S_{41}$ bis $S_{44}$ an den oberen und unteren Rändern des Bildes 1 hinzugenommen werden, welche in denselben Spalten liegen wie die bereits ausgewählten Stützpunkte $S_{11}$ bis $S_{34}$ im Inneren des Bildes.

Diesen zusätzlichen Stützpunkten $S_{01}$ bis $S_{44}$ können dann im einfachsten Falle die Kennwerte der jeweils nächstgelegenen Stützpunkte $S_{11}$ usw. direkt zugeordnet werden. Dies kann in derselben Weise am rechten und linken Bildrand sowie an den in den Ecken des Bildes 1 gelegenen Bildpunkten (zusätzliche Stützpunkte $S_{00}$ bis $S_{45}$) geschehen. Die Interpolation kann dann so erfolgen, daß zunächst in den die Stützpunkte enthaltenden Spalten, also beispielsweise $S_{01}$ bis $S_{41}$, linear vertikal interpoliert wird, also die Kennwertpaare für sämtliche innerhalb dieser ausgewählten Spalten liegenden Bildpunkte ermittelt werden. Hiervon ausgehend können dann entsprechende horizontale Interpolationen in sämtlichen Bildpunktzeilen durchgeführt werden, so daß dann jedem einzelnen Bildpunkt des Bildes 1 zumindest durch Interpolation ein Kennwertpaar zugeordnet ist.

In Fig. 5 ist eine Vorrichtung zur Durchführung des Verfahrens gemäß der Erfindung in ihrer ersten Hauptvariante schematisch dargestellt. Eine Videokamera 2 liefert über eine erste Leitung 3 Bildpunktsignale, welche einer Strukturierung des Bildes In zeilen- und spaltenmäßig angeordnete diskrete Bildpunkte entsprechen. Auf einer zweiten Leitung 4 werden gleichzeitig Synchronisationssignale ausgegeben. Die beiden genannten Leitungen führen zunächst zu einer Modifizierungsschaltung 5, welche sowohl Rechen- als auch Speicherfunktionen aufweist. Mit Hilfe der Synchronisationssignale können in einer Selektionsschaltung 8 die Bildausschnitte 11 bis 34 festgelegt werden. In einer Ermittlungsschaltung 9 werden dann die Kennwertpaare $H_{pq}$ und $K_{pq}$ für die jeweils den einzelnen Bildausschnitten zugeordneten, hier nicht dargestellten Stützpunkte berechnet. Dies geschieht im Falle der Fig. 5 in der Art einer Regelung auf der Basis der bereits in der Modifizierungsschaltung 5 modifizierten Bildpunktsignale. Diese werden über eine erste Ausgangsleitung 6 ausgegeben, während die Ausgabe der Synchronisationssignale über eine zweite Ausgangsleitung 7 erfolgt. In einer Interpolationsschaltung 15 werden nun, wie oben näher beschrieben, zu sämtlichen einzelnen Bildpunkten des gesamten Bildes 1 durch Interpolation zugehörige Kennwertpaare ermittelt. Aus diesen wiederum werden anschließend in einer Verarbeitungsschaltung 16 als Korrekturgrößen bildpunktweise die Grundhelligkeit $H_G$ sowie die Verstärkung V für den Kontrastanteil berechnet, beispielsweise wie im Zusammenhang mit Fig. 2 oben näher erläutert. Diese Korrekturgrößen werden dann der Modifizierungsschaltung 5 zugeführt, in welcher die einzelnen Bildpunktsignale des gerade einlaufenden bzw. zuletzt eingelaufenen Bildes modifiziert werden, vorzugsweise ebenfalls in der im Zusammenhang mit Fig. 2 geschilderten Weise. In die Verarbeitungsschaltung 16 werden noch die Soll- bzw. Vergleichswerte $H_S$ und $K_S$ für die Grundhelligkeit bzw. den Kontrast eingeführt.

**Patentansprüche**

1. Verfahren zur Beeinflussung der Bildqualität von durch eine elektronische Bildaufnahmevorrichtung in Form von Grauwerte repräsentierenden Bildpunktsignalen gelieferten Bildern einer Bildesfolge, welche jeweils aus einer Vielzahl von regelmäßig flächenhaft verteilten Bildpunkten zusammengesetzt sind, wobei einzelne Bildpunkte umgebende Bildausschnitte definiert, aus den Bildpunktsignalen der innerhalb dieser Bildausschnitte gelegenen Bildpunkte die lokale Helligkeit und/oder den lokalen Kontrast repräsentierende Kennwerte, den Helligkeits-Kennwert $H_{pq}$ bzw. den Kontrast-Kennwert $K_{pq}$, errechnet und den einzelnen Bildpunkten zugeordnet und diese Kennwerte schließlich zur Modifizierung der Bildpunktsignale f(x,y) im Sinne einer Beeinflussung von Grundhelligkeit und Kontrastanteil herangezogen werden, wobei aus der Vielzahl der Bildpunkte nur einige einzelne Bildpunkte, Stützpunkte $S_{pq}$, ausgewählt und zugehörige Bildausschnitte (11, 12,..., 34) definiert werden, die die interessierenden Bereiche des Bildes (1) abdecken dadurch gekennzeichnet, daß zur Berechnung der den Stützpunkten $S_{pq}$ zuzuordnenden Kennwerte $H_{pq}$, $K_{pq}$ die bereits modifizierten Bildpunktsignale $g(x,y)$ des in der Bildesfolge vorangehenden Bildes herangezogen werden,

daß die Kennwerte $H_{pq}$, $K_{pq}$ der übrigen Bildpunkte durch Interpolation aus den Kennwerten der Stützpunkte $S_{pq}$ bestimmt werden, und

daß die berechneten Kennwerte $H_{pq}$, $K_{pq}$ der Bildpunkte eines jeden Bildansschnitts zur kollektiven Modifizierung sämtlicher Bildpunktsignale $f(x,y)$ des jeweiligen Bildausschnittes des gerade aktuellen Bildes gemäß Kontrastanteil (V) und Grundhelligkeit $H_G$ verwendet werden,

wobei der jeweilige Kontrast-Kennwert $K_{pq}$ einer Bewertung unterzogen wird und zur Modifizierung bei bewerhungsgemäß zu niedrigem Kontrast-Kennwert innerhalb des jeweiligen Bildausschnittes die Grundhelligkeit $H_G$ der Bildpunktsignale des vorangegangenen Bildes beibehalten und der Kontrastanteil (V) angehoben und bei bewerhungsgemäß zu hohem Kontrast-Kennwert $K_{pq}$ die Grundhelligkeit $H_G$ bei hohem Helligkeits-Kennwert $H_{pq}$ vermindert und bei niedrigem Helligkeits-Kennwert erhöht wird.

2. Verfahren nach Anspruch 1, **dadurch gekennzeichnet,** daß die Helligkeits- und Kontrast-Kennwerte $H_{pq}$, $K_{pq}$ nach den folgenden Vorschriften berechnet werden:

$$H_{pq} = (N_o - N_u)/N,$$

$$K_{pq} = (N_o + N_u)/N),$$

wobei N die Anzahl der innerhalb des jeweiligen Bildausschnittes gelegenen Bildpunkte sowie $N_o$ und $N_u$ die Anzahl der Bildpunkte innerhalb des Bildausschnittes bedeuten, deren Signalpegel oberhalb einer vorwählbaren oberen bzw. unterhalb einer vorwählbaren unteren Signalschwelle $U_o$ bzw. $U_u$ liegen.

3. Verfahren nach Anspruch 2, **dadurch gekennzeichnet,** daß die oberen und unteren Signalschwellen symmetrisch zur Mitte des Aussteuerbereiches liegen.

4. Verfahren nach Anspruch 3, **dadurch gekennzeichnet,** daß die Differenz zwischen den oberen und unteren Signalschwellen $U_o - U_u$ die Hälfte des Aussteuerbereiches beträgt.

5. Verfahren nach einem der Ansprüche 2 bis 4, **dadurch gekennzeichnet,** daß das Bewertungskriterium für die Kontrast-Kennwerte $K_{pq}$ lautet:

$K_{pq} = 0$ (niedriger Kontrastkennwert) oder
$K_{pq} > 0$ (hoher Kontrast-Kennwert).

6. Verfahren nach Anspruch 5, **dadurch gekennzeichnet,** daß im Falle $K_{pq} > 0$ das Unterscheidungskriterium für den Helligkeits-Kennwert $H_{pq}$ lautet:

$H_{pq} > 0$ (hoher Helligkeits-Kennwert) oder
$H_{pq} < 0$ (niedriger Helligkeits-Kennwert).

7. Verfahren nach einem der vorhergehenden Ansprüche, **dadurch gekennzeichnet,** daß ein Grundhelligkeits-Sollwert $H_s$ vorgegeben und bei der Beeinflussung der jeweiligen Grundhelligkeit $H_G$ der Bildpunktsignale $f(x,y)$ neben dem jeweiligen Helligkeits-Kennwert $H_i(x,y)$ in mehr oder weniger starker Gewichtung zur Wirkung kommt, wobei die Grundhelligkeit $H_G$ der Bildpunktsignale $f(x,y)$ nach der Vorschrift

$$H_G = H_S + k_2(H_i - H_S)$$

eingestellt wird, mit $0 \leq k_2 \leq 1$.

8. Verfahren nach Anspruch 7, **dadurch gekennzeichnet,** daß ein Vergleichswert $K_S$ für den Kontrast vorgegeben wird, der bei der Beeinflussung des jeweiligen Kontrastanteils der Bildpunktsignale $f(x,y)$ im Zähler eines als Quotient ausgebildeten Verstärkungsfaktors V mit dem jeweiligen Kontrast-Kennwert $K_i(x,y)$ als Nenner auftritt.

9. Verfahren nach Anspruch 7 oder 8, **dadurch gekennzeichnet**, daß der Soll- bzw. Vergleichswert für das gesamte Bild 1 einheitlich gewählt wird.

**Claims**

1. A method of influencing the image quality of images of an image sequence supplied, in the form of pixel signals representing grey-scale values, by an electronic image pick-up device, each of said images comprising a plurality of pixels distributed in a regularly two-dimensional manner, image windows surrounding individual pixels being defined, characteristic values which represent local brightness and/ or local contrast, namely the characteristic brightness value $H_{pq}$ and the characteristic contrast value $K_{pq}$ respectively, being calculated from the pixel signals of the pixels disposed within these image windows, said characteristic values being assigned to the individual pixels and finally being used to modify the pixel signals $f(x, y)$ in the sense of influencing background brightness and contrast component, only a few individual pixels, namely interpolation points $S_{pq}$, being selected from the plurality of pixels, and there being defined associated image windows (11, 12, ..., 34) which cover the regions of interest of the image (1), characterised in that the characteristic values $H_{pq}$, $K_{pq}$ of the remaining pixels are determined by interpolation from the characteristic values of the interpolation points $S_{pq}$, in that the already modified pixel signals g(x, y) of the image which precedes in the image sequence are used to calculate the characteristic values $H_{pq}$, $K_{pq}$ to be assigned to the interpolation points $S_{pq}$, and in that the calculated characteristic values $H_{pq}$, $K_{pq}$ of the pixels of every image window are used for the collective modification of all pixel signals f(x, y) of the respective image window of the current image according to contrast component (V) and background brightness $H_G$, the respective characteristic contrast value $K_{pq}$ undergoing an evaluation, and the background brightness $H_G$ of the pixel signals of the preceding image being retained and the contrast component (V) being increased for modification purposes where, according to the evaluation, the characteristic contrast value within the respective image window is too low, and the background brightness $H_G$ being reduced at a high characteristic brightness value $H_{pq}$ and being increased at a low characteristic brightness value where, according to the evaluation, the characteristic contrast value $K_{pq}$ is too high.

2. A method according to Claim 1, **characterised in that** the characteristic brightness and contrast values $H_{pq}$, $K_{pq}$ are calculated according to the following rules:

$$H_{pq} = (N_o - N_u)/N,$$

$$K_{pq} = (N_o + N_u)/N,$$

wherein N signifies the number of pixels disposed within the respective image window and $N_o$ and $N_u$ signify the number of pixels, within the image window, whose signal levels lie above a pre-selectable upper or below a pre-selectable lower signal threshold $U_o$ and $U_u$ respectively.

3. A method according to Claim 2, **characterised in that** the upper and lower signal thresholds lie symmetrically to the centre of the control range.

4. A method according to Claim 3, **characterised in that** the difference between the upper and lower signal thresholds $U_o - U_u$ is half the control range.

5. A method according to any one of Claims 2 to 4, **characterised in that** the evaluation criterion for the characteristic contrast values $K_{pq}$ is:

$K_{pq} = 0$ (low characteristic contrast value) or
$K_{pq} > 0$ (high characteristic contrast value).

6. A method according to Claim 5, **characterised in that,** where $K_{pq} > 0$, the distinguishing criterion for the characteristic brightness value $H_{pq}$ is :

$H_{pq} > 0$ (high characteristic brightness value) or
$H_{pq} < 0$ (low characteristic brightness value).

7. A method according to any one of the preceding claims, **characterised in that** a background brightness setpoint value Hs is specified and takes effect with greater or lesser weighting during the influencing of the respective background brightness $H_G$ of the pixel signals f(x, y) in addition to the respective characteristic brightness value H;(x, y), the background brightness $H_G$ of the pixel signals f(x, y) being adjusted according to the rule:

$$H_G = H_S + k_2(H_i - H_S),$$

where $0 \leq k_2 \leq 1$.

8. A method according to Claim 7, **characterised in that** a comparison value $K_S$ is specified for the contrast, said value appearing in the numerator of an amplification factor V, which is in the form of a quotient, with the respective characteristic contrast value $K_i(x, y)$ as denominator, during the influencing of the respective contrast component of the pixel signals f(x, y).

9. A method according to Claim 7 or Claim 8, **characterised in that** the setpoint or comparison value selected is uniform for the whole image 1.

## Revendications

1. Procédé pour modifier la qualité des images de capteurs électroniques d'images sous la forme d'images d'une suite d'images, fournies sous forme de signaux de points images représentant des valeurs de gris et composées chaque fois d'un grand nombre de points images répartis régulièrement sur la surface, selon lequel

- on définit des segments d'images entourant les différents points images, à partir des signaux des points images situés dans ces segments d'images, on calcule la valeur caractéristique de luminosité $H_{pq}$ représentant la luminosité locale et/ou la valeur caractéristique de contraste $K_{pq}$ représentant le contraste local, et on les associes aux différents points images, puis on utilise ces valeurs caractéristiques pour modifier les signaux de points images f(x, y) dans le sens d'une modification de la luminosité de base et de la composante de contraste,

- à partir du grand nombre de points images on sélectionne seulement quelques points images comme points d'appui $S_{pq}$ et on définit les segments d'images (11, 12... 34) correspondants qui recouvrent les zones les plus intéressantes de l'image (1),

caractérisé en ce que

- pour calculer les valeurs caractéristiques $H_{pq}$, $K_{pq}$ associées aux points d'appui $S_{pq}$, on utilise les signaux de points images déjà modifiés g (x,y) de l'image précédente dans la succession des images, et
- on utilise les valeurs caractéristiques calculées $H_{pq}$, $K_{pq}$ des points images de chaque segment d'image pour modifier collectivement en fonction de la composante de contraste V et de la luminosité de base $H_G$ tous les signaux de points images f(x,y) du segment d'image respectif de l'image actuelle,
- on soumet la valeur caractéristique de contraste respective $K_{pq}$ à une évaluation et pour modifier en cas de valeur caractéristique de contraste trop faible dans le segment d'image respectif, on conserve la luminosité de base $H_G$ des signaux de points images de l'image précédente et on relève la composante de contraste V, et pour une valeur caractéristique de contraste $K_{pq}$ trop élevée, on diminue la luminosité de base $H_G$ pour une valeur caractéristique de luminosité trop élevée $H_{pq}$ et on l'augmente pour une valeur caractéristique de luminosité trop faible.

2. Procédé selon la revendication 1, caractérisé en ce qu' on calcule les valeurs caractéristiques de luminosité de contraste $H_{pq}$, $K_{pq}$ selon les règles suivantes :

$$H_{pq} = (N_o - N_u)/N,$$

$$K_{pq} = (N_o + N_u)/N,$$

dans ces formules N représente le nombre de points images situés dans chaque segment d'image respectif et $N_o$ et $N_u$ représentent le nombre de points images dans le segment d'image dont le niveau du signal est au dessus ou respectivement au-dessous d'un seuil de signal $U_o$ ou $U_u$, supérieur ou inférieur présélectionné.

3. Procédé selon la revendication 2, caractérisé en ce que les seuils de signal supérieur et inférieur sont symétriques par rapport au milieu de la plage d'extension.

4. Procédé selon la revendication 3, caractérisé en ce que la différence $U_o - U_u$ entre les seuils supérieur et inférieur du signal correspond à la moitié de la plage de commande.

5. Procédé selon l'une quelconque des revendications 2 à 4, caractérisé en ce que le critère d'évaluation de la valeur de contraste $K_{pq}$ est le suivant :

$K_{pq} = 0$ (valeur de contraste faible) ou
$K_{pq} > 0$ (valeur de contraste élevée).

6. Procédé selon la revendication 5, caractérisé en ce que dans le cas où $K_{pq} > O$, le critère de décision pour la valeur caractéristique de luminosité $H_{pq}$ est le suivant :

$H_{pq} > 0$ (valeur caractéristique de luminosité élevée) ou
$H_{pq} < 0$ (valeur caractéristique de luminosité faible).

7. Procédé selon l'une quelconque des revendications précédentes, caractérisé en ce qu' on prédéfinit une valeur de consigne de luminosité de base $H_S$ et en influençant la luminosité de base respective $H_G$ des signaux de points images f(x,y), à côté de la valeur caractéristique de luminosité respective $H_i$(x,y) on a une pondération plus ou moins accentuée, la luminosité de base $H_G$ des signaux de points images f(x,y) se définissant suivant la règle suivante :

$$H_G = H_S + k_2(H_i - H_S)$$

avec $0 \leq k_2 \leq 1$.

8. Procédé selon la revendication 7, caractérisé en ce qu' on prédéfinit une valeur de comparaison ($K_S$) pour le contraste qui, pour influencer la composante de contraste respective des signaux de points images f(x,y) vient comme dénominateur d'un coefficient d'amplification V réalisé comme quotient avec la valeur caractéristique de contraste respective $K_i(x,y)$.

9. Procédé selon la revendication 7 ou 8, caractérisé en ce que la valeur de consigne ou de comparaison pour l'ensemble de l'image (1) est choisie de manière uniforme.

**Fig. 1**

**Fig. 2**

$$f_{n+1}(x,y) \longrightarrow \boxed{H_{pqn} + V_{pqn}\left[\, f_{n+1}(x,y) - H_{pqn}\,\right]} \longrightarrow g_n(x,y)$$

$$\boxed{\begin{array}{c} H_{Gpqn} = H_{Gpq(n-1)} \\ V_{pqn} = k_1\, V_{pq(n-1)} \end{array}} \longleftarrow k_1$$

$j = n$

$j = n-1$

ja

$$\boxed{\begin{array}{c} H_{pqj} \\ V_{pqj} \\ 0 \le j \le n-1 \end{array}}$$

$$\diamondsuit\ \ \substack{?\\ K_{pqn} = 0}$$

$$\boxed{\begin{array}{c} H_{pqn} \\ K_{pqn} \end{array}} \longleftarrow \boxed{U_0, U_u}$$

nein

$j = n-1$

$$\boxed{\begin{array}{c} H_{Gpqn} = H_{Gpq(n-1)} - k_2 H_{pqn} \\ V_{pqn} = k_3\, \dfrac{K_S}{K_{pqn}} \end{array}} \longleftarrow K_S$$

$\longleftarrow \boxed{k_2, k_3}$

$j = n$

## Fig. 3

Fig. 4

Fig. 5